# EUROPEAN PATENT SPECIFICATION

(11) **EP 2 685 421 B1**
(45) Date of publication and mention of the grant of the patent: **07.10.2015**
(21) Application number: 12176383.3
(22) Date of filing: 13.07.2012
(51) Int. Cl.: G05B 19/042, G06K 9/00, H04N 7/18

(54) **Determining objects present in a process control system**
Ermittlung vorhandener Objekte in einem Prozesssteuerungssystem
Détermination de la présence d'objets dans un système de commande de procédé

(43) Date of publication of application: 15.01.2014
(73) Proprietor: ABB Research Ltd., 8050 Zürich (CH)
(72) Inventor: Brönmark, Jonas, 722 27 Västerås (SE); Olausson, Martin, 724 82 Västerås (SE); Vartiainen, Elina, 722 18 Västerås (SE)
(74) Representative: Savela, Reino Aleksi

(56) References cited:
- US-A1- 2002 130 846
- US-A1- 2011 200 245

## Description

### FIELD OF THE INVENTION

The present invention generally relates to process control systems. More particularly the present invention relates to a method, video control arrangement and a computer program product for determining objects present in a process control system.

### BACKGROUND

A process control system normally comprises a number of process control objects involved in the control of the process.

The process control system does then typically comprise control computers as well as work stations or monitoring computers via which operators can monitor the process. The work stations are then typically provided in a control room.

It is also customary to have video cameras installed at locations around the process control objects. The cameras capture video images that are streamed to the control room for being observed via the monitoring computers. The operators can then view the video streams on the screens of their monitoring computers and order the cameras to view a particular object. This is possible as the video cameras will change both the angle and zoom to view different objects. Typically the objects are then known in relation to the camera views through having been pre-configured to fit the position of each process control object.

US 2011/0200245 describes a manufacturing control system comprising a vision system for viewing operations within a manufacturing area and for producing vision data representing the viewed operations. A systems control analyzes the vision data, and controls at least two control functions related to the manufacturing operations based on the analyzed vision data.

US 2002/0130846 describes a portable computer for use in interfacing to a process control system having a host system includes a housing adapted for hand-held operation, a processing unit disposed within the housing and a computer readable memory disposed within the housing and coupled to the processing unit. The portable computer also includes a display, a keypad and a radio frequency transceiver adapted to communicate with the host system, all of which are disposed within the housing and communicatively coupled to the processing unit. A first software routine stored in the computer readable memory processes a user input received from the keypad and sends a command to the host system via the radio frequency transceiver. Additionally, a second software routine stored in the computer readable memory receives process information sent from the host system in response to the command and displays the received process information via the portable computer display.

US 2011/0199487 describes video cameras in a process control system or an automation system where a determination is made of which cameras are in line of sight with an object and also various ways to focus and steer cameras to objects.

Video cameras can also be used in relation to security such as for ensuring that an operator does not come too close to a dangerous machine or process. This is described in EP 1061487.

There are a number of problems associated with the above-mentioned use of video cameras.

For each object that an operator wants to view in a video stream, the parameters must be configured to enable the video camera to show the relevant object. If a camera is moved, i.e. placed in another location, the parameters have to be reconfigured. If a new object is added in front of the camera, this object may also have to be manually added to the process control system.

Operators may also want to see live images of all objects, but as it requires a lot of manual work to configure a new object this may not be done. In such views there is furthermore no identification available to ensure which process control object is shown. There is no guarantee that the video stream is showing the correct object as the configuration could have been performed incorrectly.

The present invention is provided for solving one or more of the above described problems.

### SUMMARY OF THE INVENTION

The present invention addresses the problem of determining objects being captured with video cameras in a process control system. The invention is more particularly directed towards improving this type of determination.

This object is according to a first aspect of the invention solved through a method of determining objects present in a process control system, the method being performed by a video control arrangement and comprising the steps of:
- repeatedly scanning an area, via a group of video cameras comprising at least one video camera, in order to obtain a set of video streams,
- determining if there are any new objects associated with the process control system in the area through detecting object identifiers of objects in the video streams,
- determining if a detected new object is stationary or mobile,
- reporting the detected new object to a process control server, and
- registering stationary objects as process control objects.

This object is according to a second aspect of the invention solved through a video control arrangement for determining objects present in a process control system, the video control arrangement comprising:
- an object determining unit configured to
   order a group of video cameras, comprising at least one video camera, to repeatedly scan an area in order to obtain a set of video streams,
   determine if there are any new objects associated with the process control system in the area through detecting object identifiers of objects in the video streams,
   determine if a detected new object is stationary or mobile,
   report the detected new object to a process control server, and
   register stationary objects as process control objects.

This object is according to a third aspect of the invention solved through a computer program product for determining objects present in a process control system, the computer program product being provided on a data carrier comprising computer program code adapted to perform the method of the first aspect, when executed on at least one device providing the video control arrangement.

The present invention has a number of advantages. There is no need to manually program the video cameras to know the location of process control objects as these are automatically determined. There is also no need for reconfigurations of cameras. There is thus no extra work needed if a camera is moved or replaced. If an object known to the process control system but previously not detected in the scanned area is detected in front of one of the video cameras, this object will automatically be reported to the process control system, which system may then update known locations of the object accordingly. The invention also provides cost savings since there is no need for configuring the location of each process control object. There is furthermore no effort involved with the configuring of a new video camera.

### BRIEF DESCRIPTION OF THE DRAWINGS

The present invention will in the following be described with reference being made to the accompanying drawings, where
Fig. 1 schematically shows an industrial plant with a process control system operating an industrial process as well as a video control arrangement of the process control system,
Fig. 2 schematically shows a block schematic of a video control server of the video control arrangement,
Fig. 3 shows premises of the industrial plant with a number of rooms, where a first group of video cameras of the video control arrangement are placed in a first of the rooms comprising a process control object and a second group of video cameras are placed in a second of the rooms,
Fig. 4 schematically shows a maintenance engineer in the first room with the process control object,
Fig. 5 schematically shows the transmission of a video stream from one of the video cameras in the group to the video control server,
Fig. 6 shows a flow chart of a number of method steps being performed in a method of determining objects present in a process control system,
Fig. 7 shows a number of additional method steps being performed in the method, and
Fig. 8 schematically shows a data carrier with computer program code, in the form of a CD-ROM disc, for performing the steps of the method.

### DETAILED DESCRIPTION OF THE INVENTION

In the following, a detailed description of preferred embodiments of a method, data presentation control arrangement and a computer program product for determining objects present in a process control system will be given.

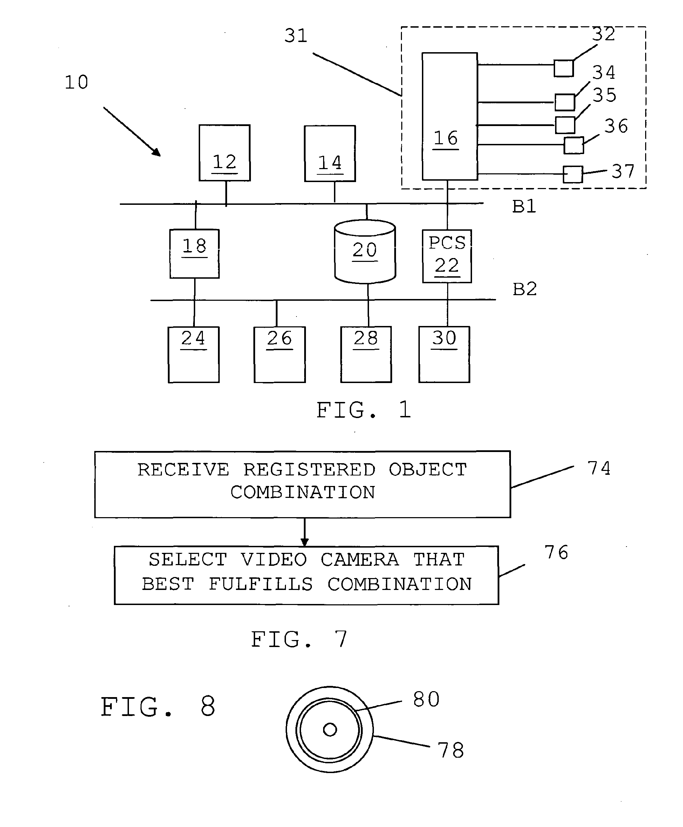

Fig. 1 schematically shows an industrial plant where a process control system 10 is provided. The process control system 10 is a computerized process control system for controlling an industrial process. The process can be any type of industrial process, such as electrical power generation, transmission and distribution processes as well as water purification and distribution processes, oil and gas production and distribution processes, petrochemical, chemical, pharmaceutical and food processes, and pulp and paper production processes. These are just some examples of processes where the system can be applied. There exist countless other industrial processes. The processes may also be other types of industrial processes such as the manufacturing of goods. A process may be monitored through one or more process monitoring computers, which communicate with a server handling monitoring and control of the process.

In fig. 1 the process control system 10 therefore includes a number of process monitoring computers 12 and 14. These computers may here also be considered to form operator terminals or work stations and are connected to a first data bus B1. There is also a video control server 16 connected to this first data bus B1, which server 16 is connected to a first and a second group of video cameras, each group comprising at least one video camera. The first group here comprises four video cameras, a first video camera 32, a second video camera 34, a third video camera 35 and a fourth video camera 36. The second group comprises a fifth video camera 37. The video control server 16 together with the first and second group of video cameras furthermore form a video control arrangement 31. It should be realized that it is possible with more or fewer video cameras in the first and second groups. It is also possible with more and fewer groups of video cameras.

There is furthermore a second data bus B2 and between the first and second data busses B1 and B2 there are connected a server 18 providing control and protection of the process and a database 20 where data relating to control and protection of the process is stored. Such data relating to control and protection may here comprise process data such as measurements and control commands, while data relating to protection may comprise alarm and event data as well as data on which alarms and events can be generated, such as measurements made in the process. There is furthermore a process control server 22 connected between the two buses B1 and B2.

To the second data bus B2 there is also connected a number of further devices 24, 26, 28 and 30. These further devices 24, 26, 28 and 30 are field devices, which are devices that are interfaces to the process being controlled. A field device is typically an interface via which measurements of the process are being made and to which control commands are given. Because of this the field devices are furthermore process control objects. In one variation of the invention a first field device is a first process control object 24, which as an example is a tank.

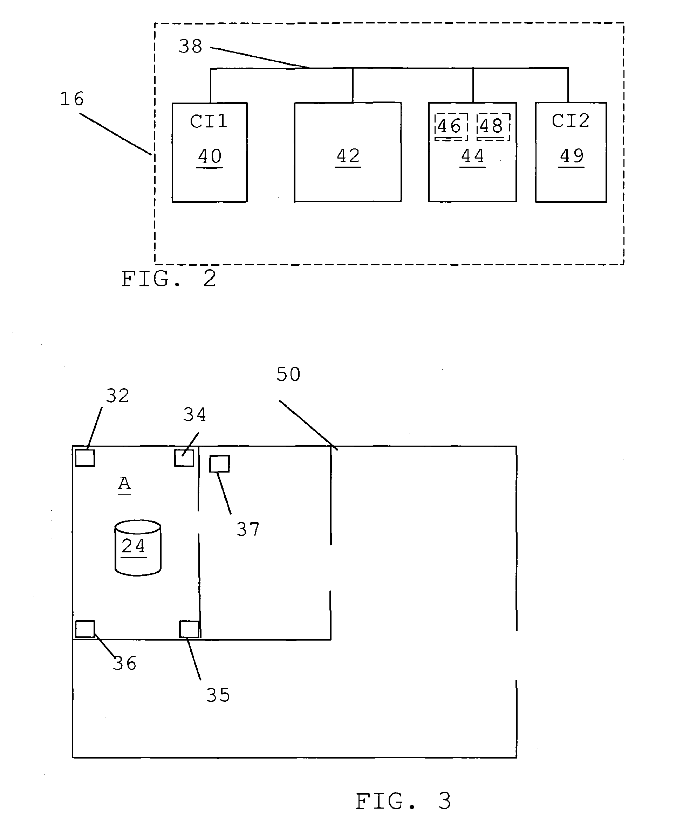

Fig. 2 shows a block schematic of the video control server 16. The video control server 16 comprises a bus 38 and to this bus there is connected a first communication interface 40 for connection to the first data bus B1, a processor 42, a program memory 44 as well as a second communication interface 49 for communication with the group of video cameras. The communication interfaces 40 and 49 may be Ethernet communication interfaces.

In the program memory 44 there is provided software code which when being run by the processor 42 forms a an object determining unit 46 and a view determining unit 48.

Fig. 3 schematically shows a facility 50 of the industrial plant. The facility 50 is here in the form of a building with a number of rooms. There is here a first room. In this first room the first process control object 24 is located. In the first room also the four video cameras of the first group are provided. In this example the first, second, third and fourth video cameras 32, 34, 35, 36 are placed in the corners of the first room, for instance one in each corner. Next to the first room there is a second room. In this second room, the video cameras of the second group are placed. The fifth video camera 37 is thus placed in the second room. The second room in turn leads to a third larger room. In the third room there is a door leading out of the premises 50. There may also be further video cameras in the second room as well as video cameras also in the third room. However, these have been omitted in order to simplify the description of the invention. The first room is also shown as providing an area A that is covered by the first group of video cameras. This area is in this case the first room.

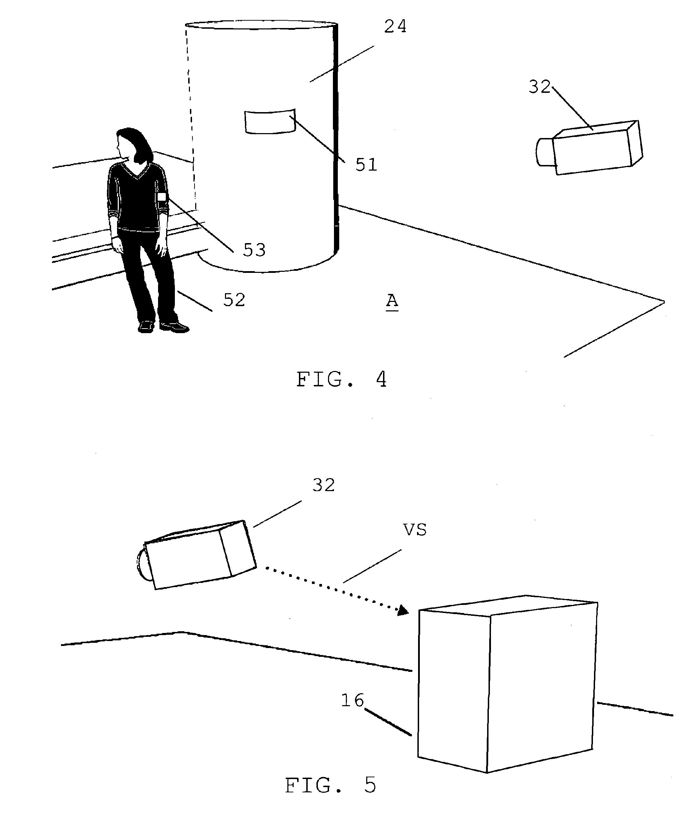

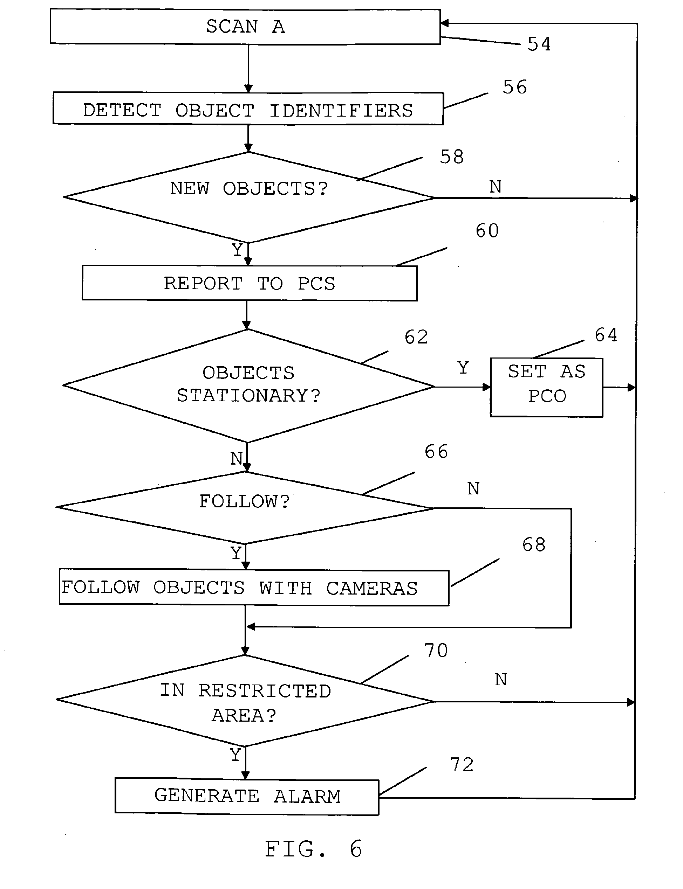

A first embodiment of the invention will now be described with reference also being made to fig. 4 - 7, where fig. 4 schematically shows a maintenance engineer in the first room with the process control object, fig. 5 schematically shows the transmission of a video stream from one of the video cameras in the first group to the video control server, fig. 6 shows a flow chart of a number of method steps being performed in a method of determining objects present in a process control system and fig. 7 shows a number of additional method steps being performed in a variation of the method.

The invention will now be described in relation to the first group of video cameras. It should however be realized that all groups may operate in the same manner.

All process control objects 24, 26, 28 and 30, which are typically stationary objects, are provided with object identifiers 51, such as optically readable identification tags. These may be barcodes, like one-or two-dimensional bar codes. In this way they can be identified using the video cameras of the video control arrangement 31. However, also other objects in the system such as mobile objects like maintenance engineers and vehicles such as fork lifts may be provided with such object identifiers. In fig. 4 there is shown one maintenance engineer 52 being provided with an object identifier 53 in the form of an optically readable identification tag, for instance in the form of a one- or two-dimensional bar code. In fig. 4 also the first process control object 24 is equipped with such an optically readable tag 51, for instance in the form of a one- or two-dimensional bar code.

As outlined in fig. 6, the video cameras 32, 34, 35, 36 of the first group are configured to repeatedly scan the area A they are set to cover, step 54, which area is here exemplified by the first room. This scanning may be ordered by the object determining unit 46 and may be performed at regular intervals, such as once every 30 seconds, once a minute or once every fifteen minutes. Scanning may be performed through moving the video camera in a range of angles in a vertical direction and in a range of angles in a horizontal direction. In this scanning the video cameras thus record or register video streams that are transferred to the video control server 16. One such video stream VS captured or recorded by the first video camera 32 is in fig. 5 schematically shown as being transferred to the video control server 16. The video streams being recorded or registered through this scanning are thus forwarded to the object determining unit 46. They may also be stored in a video library, for instance in the memory 44.

The object determining unit 46 analyses the video streams in order to see if there are any object identifiers in them. The object determining unit 46 thus detects object identifiers of objects in the various video streams, step 56. It may here as an example detect the object identifier 51 of the first process control object 24 as well as the object identifier 53 of the maintenance engineer 52. It may thus detect the bar codes of object identifiers that appear in the line of sights or views of the video cameras when scanning. It may also detect the position of the object. This detection may be made based on a known location of the video camera, the angle(s) of the scan when the object is detected as well as through a determination of the distance between the video camera and the object.

In the memory 44 there may furthermore be stored the identifiers of previously detected object identifiers, which known identifiers the object determining unit 46 compares with the newly detected object identifiers. In case the detected identifiers are already known, step 58, then the object determining unit 46 waits until it is time for a new scan and then again orders the video cameras 32, 34, 35 and 36 to perform scanning, step 54. If the first process control object 24 was identified in a previous scanning, the identifier 51 would be handled in this way.

However, in case any detected identifier is not previously known, step 58, then it is reported to the process control server 22, step 60, which server 22 may thereby be notified of the presence of a process control object or some other object related to the process being in the area A. Also the position may be reported. The process control server 22 can then act upon this knowledge. The detected identifier may also get stored in the memory 44 together with previously detected object identifiers.

The scanning may be set to start as soon as the video cameras are installed. This means that the method may be used for determining the objects covered by the video cameras without pre-defining objects in video camera views. This also means that initially there may be no identifiers stored in the memory 44. As an alternative it is possible that some objects are known and that their identifiers are stored in the memory.

The video streams may also be presented, through operator selections, via the display of the monitoring computers 12 and 14. The operator may for instance select an object via process graphics on the monitoring computer and then one or more video streams of video cameras via which an object has been identified.

It is possible for the operator at the monitoring computers 12 and 14 to use the video cameras in different ways depending on if the objects are regular process control objects or some other temporarily present objects.

Because of this the object determining unit 46 analyses the recorded video streams VS to see if any of the new objects are stationary or moving. If they are stationary, step 62, then they are registered as process control objects, step 64, and this fact may also be reported to the process control server 22. This is then again followed by a new scan according to the schedule, step 54. The registering may here involve registering which objects are visible via specific video cameras. It is also possible to register at which angles they are visible as well as the position.

It is furthermore possible that a previously identified and registered object is no longer possible to identify in a scan of the area A. In this case it is possible for the object determining unit 46 to de-register the object and inform the process control server 22 of the object no longer being present in the area A as well as possibly to inform of the last known position of this object.

If however the objects are not stationary, but mobile, step 62, it is possible for the operators at the monitoring computers 12 and 14 to select to follow an object. It is for instance possible to determine that an object is mobile through the object having a movement that deviates from the movement caused by the video camera performing the scanning. Therefore if the object determining unit 46 receives an instruction to follow a mobile object, step 66, such as to follow the maintenance engineer 52 with identifier 53, then the video cameras are ordered to follow the object, step 68. It can thus be seen that it is possible to lock onto this object with the video cameras. This may involve following the object from the first room to the second room and may thus involve also the fifth camera 37 following the maintenance engineer 52 if entering the second room. In case there are further video cameras in the second and the third room, it is of course also possible to follow the "object" further.

In both cases, whether the object is to be followed or not, the object determining unit 46 investigates if the object is in a restricted area. If for instance the object identifier is deemed to be associated with a human and the first process control object contains a chemical substance that is toxic, then it is possible that the human is not allowed to be too close to the first process control object 24.

If the mobile object is deemed to be within a restricted area, step 70, then the object determining unit 46 may generate an alarm, step 72, which may be presented to the operator via a monitoring computer 12 or 14. The alarm may also be forwarded to the process control server 22. If the mobile object 52 is not in the restricted area then the object determining unit 46 awaits the performing of the next scan, step 54.

It can thus be seen that it is possible to follow or lock to a mobile object and if this object, as it is being followed, enters a restricted area, then an alarm is generated.

It is also possible for the operator to make selections of how the stationary process control objects are to be viewed. Such selections are handled by the view determining unit 48. The view determining unit 48 may receive an operator selection of a combination of registered process control objects to be viewed, step 74. The operator may for instance perform a logical object combination in the form of (A and B) not (C and D), where A, B, C and D denote different process control objects. Such a logical combination may specify that the operator desires to view the process control objects A and B, but not process control objects C and D.

The view determining unit 48 thus analyses the operator selections and then selects a video camera and perhaps also a video camera angle that best fulfills the combination selection, i.e. which best meets the operator requirements of objects that are desired to be viewed (and not viewed). The camera angle may be a camera angle in a horizontal position and/or an angle in a vertical direction.

A video stream from a selected camera can thus be presented to the operator. It is possible to link further data to an object in a video stream, such as a face plate and process control data of the object such as process measurements. This linking to the object would then be made based on the object identifier and may be accessed by the operator through selecting the object as it is being presented in a video stream. The object determining unit may in this case receive such a user selection and provide a pointer to the corresponding further data, which the monitoring computer may then fetch from the process control system.

The invention has a number of advantages. The video cameras may automatically detect and identify objects in their view. By continuously tracking objects in the picture frames of the video streams, the video cameras will detect identification tags of plant devices or process control objects (such as pumps, tanks or temperature sensors), plant personnel and mobile plant equipment (such as forklifts). Whenever a new object is detected and identified, the process control system will be informed about this object.

As was discussed above, the automatic object identification could be used in a variety of ways:
- The operator could select to view all the different video camera views of a particular object.
- A moving object can be traced from one video camera to another. If the operator selects to lock a video camera view on a specific moving object (person or vehicle) the video cameras may then try to focus on the object whenever it moves.
- The operator may also perform smart requests such as "Show me the video camera view where both object x and y are visible".
- As persons are also identified, the operators can track colleagues to find out where they are located.
- If mobile equipment or personnel are detected in a restricted area, the video control arrangement can automatically raise an alarm.

The following use case scenario can occur when using the invention:
1. A new video camera 32 is mounted on the wall of the first room.
2. The video camera 32 is, when idle, continuously scanning (by movements) the environment for any object identifiers.
3. Whenever an object identifier is found, the information is uploaded to the process control server 32. No manual configuration is needed.
4. Operator Nick just obtained an alarm from Tank 24. Before Nick orders maintenance assistance he wants to confirm the tank status from the video cameras.
5. He selects the tank from the process graphics on his operator screen 12 and requests a list of all video camera views that contains the tank 24.
6. A list of video camera views, populated from the video cameras themselves, is then seen on the screen. All different views contain the tank 24.
7. Nick browses through all the video camera views to get a good understanding of the tank 24.
8. Suddenly Nick receives an alarm, which indicates that Nina 52 just entered a restricted area. The alarm is triggered by a camera that has detected the object identifier 53 of Nina 52.

This invention thus allows:
- Automatic configuration of video camera views. There is no longer any need to manual program the cameras to know the location of process control objects as the video cameras together with the object determining unit themselves identify the objects in their surroundings.
- Redundant video camera views. Several cameras may view the same object from different angles. This prevents the operator from being totally dependent on only one camera, which can be broken or incorrectly configured.

- A moving object can be traced from one camera to another. When the operator selects to lock a video camera view on a specific moving object (person or vehicle) the video cameras are trying to focus on the object whenever it moves.
- Smart requests of video camera views. The operator may perform smart requests, such as "Show me the video camera view where both object x and y are visible but not z".
- Restriction of dangerous areas. As persons can be detected by the cameras, the video control arrangement may immediately detect if some unauthorized person is entering a dangerous or restricted area.
- No need for reconfiguration. As the video cameras automatically updates the process control system if there are new surrounding objects, there is no extra work needed if a camera is moved, or replaced.
- Real time tracking. Mobile objects as vehicles or persons may be tracked. If an object known to the process control system but previously not detected in the covered area is detected in front of one of the video cameras, this object will automatically be reported to the process control system, which system may then update known locations of the object accordingly.
- Several views of an object increases process understanding. Process control objects are recorded using several video cameras, which dramatically improves the operator's situation awareness.

Several further benefits can be listed for this invention:
- Cost savings. There is no need for configuring the location of each process control object. The video cameras will find them without requiring manual labor.
- Improved situation awareness. With many views of the same process control object, the operators gain a much better comprehension of the process.
- Effortless to configure a new video camera.
- Safety. The video cameras report the location of persons, which may be used to generate an alarm if any unauthorized person enters a blocked area.

The object determining unit and view determining unit were above described as being implemented in a video control server of the process control system. They may as an alternative be provided in one or more of the video cameras. These units may thus be provided in the logic of the video cameras.

The object determining unit and view determining unit may furthermore both be provided in the form of one or more processors together with computer program memory including computer program code for performing their functions. As an alternative they may be provided in the form of an Application Specific Integrated Circuit (ASIC) or Field-Programmable Gate Array (FPGA). This computer program code may also be provided on one or more data carriers which perform the functionality of the present invention when the program code thereon is being loaded into an object determination server or the logic of a video camera. One such data carrier 78 with computer program code 80, in the form of a CD ROM disc, is schematically shown in fig. 8. Such computer program may as an alternative be provided on another server and downloaded therefrom into the object determination server and/or a video camera.

The invention can be varied in many ways. Objects were for instance described as being detected via object identifiers in video streams. It is possible with other types of detection. A video camera may for instance be provided with a near field communication reader (NFC) reading an NFC tag on objects. It is also possible to determine a position to which a camera is pointing for instance through using Global Positioning System (GPS) or wireless communication networks and obtain data about objects at these positions in various ways. Moving objects, such as people, may then be identified through mobile terminals, like mobile phones, that they are equipped with and the presence of process control objects may be obtained through investigating a database with positions about these objects. It can therefore be seen that the present invention is only to be limited by the following claims.

## Claims

1. A method of determining objects (24; 52) present in a process control system (10), the method being performed by a video control arrangement (31) and comprising the steps of:
- repeatedly scanning (56) an area (A), via a group of video cameras (32, 34, 35, 36) comprising at least one video camera, in order to obtain a set of video streams (VS), and
- determining (58) if there are any new objects (24; 52) associated with the process control system in the area through detecting object identifiers (51; 53) of objects in the video streams,
**characterised by** the further steps of
- determining if a detected new object is stationary or mobile,
- reporting (60) the detected new object to a process control server (22), and
- registering (64) stationary objects as process control objects.

2. The method according to claim 1, where there is more than one video camera covering the area from different angles, the method further comprising receiving (74), from an operator, a selection of a combination of registered objects to be monitored and selecting (76) a video camera angle that best meets the operator combination selection desired to be viewed.

3. The method according to any previous claim, wherein if (62) the detected new object (52) is moving, by further comprising receiving (66), from an operator, a selection to follow the moving object and following (68), using video cameras of the video control arrangement, the moving object as it moves in the area.

4. The method according to claim 3, further comprising determining (70) if the moving object is in a restricted area and generating (72) an alarm if it is.

5. The method according to any previous claim, wherein the object identifiers (51; 53) are provided as optically readable codes.

6. A video control arrangement (31) for determining objects (24; 52) present in a process control system (10), the video control arrangement comprising:
- an object determining unit (46) configured to order a group of video cameras (32, 34, 35, 36), comprising at least one video camera (32), to repeatedly scan an area (A) in order to obtain a set of video streams (VS), and determine if there are any new objects (24; 52) associated with the process control system in the area through detecting object identifiers (51; 53) of objects in the video streams,
**characterised by** the object determining unit (46) being further configured to
determine if a detected new object is stationary or mobile,
report the detected new object to a process control server (22), and
register stationary objects as process control objects.

7. The video control arrangement according to claim 6, where the video cameras cover the area from different angles and the arrangement further comprises a view determining unit (48) configured to receive, from an operator, a selection of a combination of registered objects to be monitored and select a video camera angle that best meets the operator combination selection desired to be viewed.

8. The video control arrangement according to any of claims 6 - 7, wherein if the detected new object (52) is moving and if the object determining unit receives an operator selection to follow the moving object it is further configured to order the video cameras in the group to follow the moving object as it moves in the area.

9. The video control arrangement according to claim 8, wherein the object determining unit is further configured to determine if the moving object is in a restricted area and generate an alarm if it is.

10. The video control arrangement according to any of claims 6 - 9, further comprising the group of video cameras.

11. The video control arrangement according to any of claims 6 - 10, wherein units of the video control arrangement are provided in a video control server (16) of the process control system.

12. The video control arrangement according to any of claims 6 - 10, wherein units of the video control arrangement are provided in at least one of the video cameras.

13. A computer program product for determining objects (24; 52) present in a process control system (10), said computer program product being provided on a data carrier (78) comprising computer program code (80) adapted to perform the method of claim 1, when executed on at least one device providing the video control arrangement.

## Patentansprüche

1. Verfahren zum Ermitteln in einem Prozesssteuerungssystem (10) vorhandener Objekte (24 ; 52), wobei das Verfahren durch eine Videosteuerungsanordnung (31) ausgeführt wird und die folgenden Schritte aufweist:
- wiederholtes Abtasten (56) in einem Bereich (A) über eine Gruppe von Videokameras (32, 34, 35, 36), die mindestens eine Videokamera umfasst, zum Erhalten eines Satzes von Videostreams (VS), und
- Ermitteln (58), ob jegliche neue Objekte (24; 52) in Zusammenhang mit dem Prozesssteuerungssystem im Bereich durch Erkennen von Objektkennungen (51; 53) von Objekten in den Videostreams vorhanden sind,
**gekennzeichnet durch** die weiteren Schritte des
- Ermittelns, ob ein erkanntes neues Objekt unbeweglich oder beweglich ist,
- Meldens (60) des erkannten neuen Objekts an einen Prozesssteuerungsserver (22), und
- Registrierens (64) von unbeweglichen Objekten als Prozesssteuerungsobjekte.

2. Verfahren nach Anspruch 1, wobei mehr als eine Videokamera den Bereich aus verschiedenen Winkeln abdecken, wobei das Verfahren ferner das Empfangen (74) einer Auswahl einer Kombination von registrierten Objekten, die überwacht werden sollen, von einer Bedienungsperson und das Auswählen (76) eines Videokamerawinkels aufweist, der der Bedienungspersonenkombinationsauswahl, die zu sehen gewünscht ist, am besten entspricht.

3. Verfahren nach einem der vorhergehenden Ansprüche, wobei, wenn (62) sich das erkannte neue Objekt (52) bewegt, es ferner das Empfangen (66) einer Auswahl von der Bedienungsperson zum Folgen des beweglichen Objekts und Folgen (68), unter Benutzung von Videokameras der Videosteuerungsanordnung, des beweglichen Objekts, wenn es sich im Bereich bewegt, enthält.

4. Verfahren nach Anspruch 3, ferner aufweisend das Ermitteln (70), ob sich das bewegliche Objekt in einem Sperrgebiet befindet, und das Erzeugen eines Alarms (72), falls es sich dort befindet.

5. Verfahren nach einem der vorhergehenden Ansprüche, wobei die Objektkennungen (51; 53) als optisch lesbare Codes vorgesehen sind.

6. Videosteuerungsanordnung (31) zum Ermitteln von in einem Prozesssteuerungssystem (10) vorhandenen Objekten (24; 52), wobei die Videosteuerungsanordnung Folgendes aufweist:
- eine Objektermittlungseinheit (46), die zum Befehlen einer Gruppe von Videokameras (32, 34, 35, 36), welche mindestens eine Videokamera (32) aufweist, zum wiederholten Abtasten eines Bereichs (A) zum Erhalten eines Satzes von Videostreams (VS) und zum Ermitteln, ob jegliche neue Objekte (24; 52) in Zusammenhang mit dem Prozesssteuerungssystem im Bereich durch Erkennen von Objektkennungen (51; 53) von Objekten in den Videostreams vorhanden sind, konfiguriert ist,
**dadurch gekennzeichnet, dass** die Objektermittlungseinheit (46) ferner zum
Ermitteln, ob ein erkanntes neues Objekt unbeweglich oder beweglich ist,
Melden des erkannten neuen Objekts an einen Prozesssteuerungsserver (22), und
Registrieren von unbeweglichen Objekten als Prozesssteuerungsobjekte
konfiguriert ist.

7. Videosteuerungsanordnung nach Anspruch 6, wobei die Videokameras den Bereich aus verschiedenen Winkeln abdecken und die Anordnung ferner eine Sichtermittlungseinheit (48) aufweist, die zum Empfangen einer Auswahl einer Kombination von registrierten Objekten, die überwacht werden sollen, von einer Bedienungsperson und zum Auswählen eines Videokamerawinkels, der der Bedienungspersonenkombinationsauswahl, die zu sehen gewünscht ist, am besten entspricht, konfiguriert ist.

8. Videosteuerungsanordnung nach einem der Ansprüche 6 bis 7, wobei, wenn sich das erkannte neue Objekt (52) bewegt, und wenn die Objektermittlungseinheit eine Bedienungspersonenauswahl zum Folgen des beweglichen Objekts empfängt, sie ferner zum Befehlen der Videokameras in der Gruppe zum Folgen des beweglichen Objekts, wenn es sich im Bereich bewegt, konfiguriert ist.

9. Videosteuerungsanordnung nach Anspruch 8, wobei die Objektermittlungseinheit ferner zum Ermitteln, ob sich das bewegliche Objekt in einem Sperrgebiet befindet, und zum Erzeugen eines Alarms, falls es sich dort befindet, konfiguriert ist.

10. Videosteuerungsanordnung nach einem der Ansprüche 6 bis 9, ferner aufweisend die Gruppe von Videokameras.

11. Videosteuerungsanordnung nach einem der Ansprüche 6 bis 10, wobei Einheiten der Videosteuerungsanordnung in einem Videosteuerungsserver (16) des Prozesssteuerungssystems vorgesehen sind.

12. Videosteuerungsanordnung nach einem der Ansprüche 6 bis 10, wobei Einheiten der Videosteuerungsanordnung in mindestens einer der Videokameras vorgesehen sind.

13. Computerprogrammprodukt zum Ermitteln von in einem Prozesssteuerungssystem (10) vorhandenen Objekten (24; 52), wobei das Computerprogrammprodukt auf einem Datenträger (78) vorgesehen ist, der Computerprogrammcode (80) aufweist, welcher zum Ausführen des Verfahrens von Anspruch 1 geeignet ist, wenn er auf mindestens einer Vorrichtung ausgeführt wird, die das Videosteuerungssystem vorsieht.

## Revendications

1. Procédé de détermination d'objets (24 ; 52) présents dans un système de commande de processus (10), le procédé étant mis en oeuvre par un dispositif de commande vidéo (31) et comprenant les étapes consistant à :
- balayer de manière répétée (56) une zone (A), par l'intermédiaire d'un groupe de caméras vidéo (32, 34, 35, 36) comprenant au moins une caméra vidéo, afin d'obtenir un ensemble de flux vidéo (VS), et
- déterminer (58) s'il y a d'éventuels nouveaux objets (24 ; 52) associés au système de commande de processus dans la zone en détectant des identifiants d'objets (51 ; 53) d'objets contenus dans les flux vidéo, **caractérisée par** les étapes supplémentaires consistant à
- déterminer si un nouvel objet détecté est stationnaire ou mobile,
- signaler (60) le nouvel objet détecté à un serveur de commande de processus (22), et
- enregistrer (64) des objets stationnaires en tant qu'objets de commande de processus.

2. Procédé selon la revendication 1, dans lequel il existe plus d'une caméra vidéo couvrant la zone depuis des angles différents, le procédé consistant en outre à recevoir (74), en provenance d'un opérateur, une sélection d'une combinaison d'objets enregistrés devant être surveillés et sélectionner (76) un angle de caméra vidéo qui correspond le mieux à la sélection de combinaison de l'opérateur dont la visualisation est souhaitée.

3. Procédé selon l'une quelconque des revendications précédentes, consistant en outre, si (62) le nouvel objet détecté (52) est en mouvement, à recevoir (66), en provenance d'un opérateur, une sélection permettant de suivre l'objet en mouvement et suivre (68), au moyen de caméras vidéo du dispositif de commande vidéo, l'objet en mouvement lorsqu'il se déplace dans la zone.

4. Procédé selon la revendication 3, consistant en outre à déterminer (70) si l'objet en mouvement se trouve dans une zone restreinte et à générer une alarme (72) si cela est le cas.

5. Procédé selon l'une quelconque des revendications précédentes, dans lequel les identifiants d'objets (51 ; 53) sont fournis sous la forme de codes lisibles optiquement.

6. Moyen de commande vidéo (31) permettant de déterminer des objets (24 ; 52) présents dans un système de commande de processus (10), le dispositif de commande vidéo comprenant :
- une unité de détermination d'objets (46), configurée pour ordonner à un groupe de caméras vidéo (32, 34, 35, 36), comprenant au moins une caméra vidéo (32), de balayer de manière répétée une zone (A) afin d'obtenir un ensemble de flux vidéo (VS), et déterminer s'il y a d'éventuels nouveaux objets (24 ; 52) associés au système de commande de processus dans la zone en détectant des identifiants d'objets (51 ; 53) d'objets contenus dans les flux vidéo,
**caractérisé en ce que** l'unité de détermination d'objets (46) est en outre configurée pour
déterminer si un nouvel objet détecté est stationnaire ou mobile,
signaler le nouvel objet détecté à un serveur de commande de processus (22), et
enregistrer des objets stationnaires comme étant des objets de commande de processus.

7. Moyen de commande vidéo selon la revendication 6, dans lequel les caméras vidéo couvrent la zone depuis des angles différents et le dispositif comprend en outre une unité de détermination de vue (48) configurée pour recevoir, en provenance d'un opérateur, une sélection d'une combinaison d'objets enregistrés devant être surveillés et pour sélectionner un angle de caméra vidéo qui correspond le mieux à la sélection de combinaison de l'opérateur dont la visualisation est souhaitée.

8. Moyen de commande vidéo selon l'une quelconque des revendications 6 - 7, dans lequel, si le nouvel objet détecté (52) est en mouvement et si l'unité de détermination d'objets reçoit une sélection de l'opérateur pour suivre l'objet en mouvement, celui-ci est en outre configuré pour ordonner aux caméras vidéo se trouvant dans le groupe de suivre l'objet en mouvement lorsqu'il se déplace dans la zone.

9. Moyen de commande vidéo selon la revendication 8, dans lequel l'unité de détermination d'objets est en outre configurée pour déterminer si l'objet en mouvement se trouve dans une zone restreinte et pour générer une alarme si cela est le cas.

10. Moyen de commande vidéo selon l'une quelconque des revendications 6 - 9, comprenant en outre le groupe de caméras vidéo.

11. Moyen de commande vidéo selon l'une quelconque des revendications 6 - 10, dans lequel des unités du moyen de commande vidéo sont prévues dans le serveur de commande vidéo (16) du système de commande de processus.

12. Moyen de commande vidéo selon l'une quelconque des revendications 6 - 10, dans lequel des unités du moyen de commande vidéo sont prévues dans au moins l'une des caméras vidéo.

13. Produit de programme informatique destiné à déterminer des objets (24 ; 52) présents dans un système de commande de processus (10), ledit produit de programme informatique étant fourni sur un support de données (78) comprenant un code de programme informatique (80) apte à mettre en oeuvre le procédé de la revendication 1, lorsqu'il est exécuté sur au moins un dispositif constituant le moyen de commande vidéo.
